# EUROPEAN PATENT APPLICATION

(11) **EP 3 447 659 A1**
(43) Date of publication of application: **27.02.2019**
(21) Application number: 17187060.3
(22) Date of filing: 21.08.2017
(51) Int. Cl.: G06F 17/30

(54) **DIGITAL ASSISTANT AND METHOD OF OPERATION**

(71) Applicant: Vestel Elektronik Sanayi ve Ticaret A.S., 45030 Manisa (TR)
(72) Inventor: DÖNER, Çagdas, 45030 Manisa (TR)
(74) Representative: Flint, Adam

(57) **Abstract**

A digital assistant (10) receives an input from a user and parses the input to obtain at least one component of the input. A query including the at least one component of the input is passed to a processing module to obtain a response to the input. A response for the user is generated at the processing module and the digital assistant (10) provides the response to the user. In addition, a measure of the relevancy of the response is generated and an indication of the relevancy of the response is provided to the user by the digital assistant (10).

## Description

### Technical Field

The present disclosure relates to a digital assistant and method of operation.

### Background

A "digital assistant", also known variously as "virtual assistant", "home assistant", "intelligent personal assistant", "smart assistant" or the like, is a device, or software running on a device, that can perform tasks or services for a user. The user can input commands or questions, etc., to the digital assistant. The digital assistant then causes the command to be carried out or responds with an answer to the question, etc. Digital assistants often enable the user to provide voice inputs with the spoken word and therefore often use natural language processing to match user voice input to executable commands or questions, etc. Some digital assistants continually learn using artificial intelligence techniques, including for example machine learning.

### Summary

According to a first aspect disclosed herein, there is provided a method of operating a digital assistant, the method comprising:
receiving an input from a user;
parsing the input to obtain at least one component of the input;
passing a query including the at least one component of the input to a processing module to obtain a response to the input;
generating a response for the user at the processing module;
providing the response to the user;
generating a measure of the relevancy of the response; and
providing an indication of the relevancy of the response to the user.

This makes the process more relevant and informative for the user, and overcomes the problem of digital assistants simply giving "dumb", unintelligent responses. The user is able to obtain some level of confidence in the relevancy of the response that is provided. This also enables the user to appreciate quickly that the digital assistant may have misunderstood the query (because for example a low relevancy has been indicated), which enables the user quickly to re-issue the input (the query or the command say).

The processing module may be part of locally stored digital assistant and/or part of a "cloud-based" server.

The input may be for example a command or an instruction for the digital assistant to do something or to control the operation of some device or apparatus. As another example, the input may be a request for information. Other examples of inputs exist.

The input may be parsed to enable its meaning to be determined. For example, the input may be analysed to identify nouns, verbs, etc.

In an example, the generating a measure of the relevancy of the response comprises taking into account at least one characteristic or preference of the user.

In one example, taking into account at least one characteristic or preference of the user results in the response being more likely to be tailored to the user and therefore more relevant to the user. In another example, taking into account at least one characteristic or preference of the user means that it can be indicated that whilst a response has been given, it may in fact not be very relevant for that user, based on the specified characteristic or preference of the user.

In an example, the generating a measure of the relevancy of the response comprises generating a high relevancy in the case that the response corresponds to at least one user preference.

For example, a user has specified that he/she does not want to go out if the humidity is high, and the response advises the user not to go out on the basis that the current humidity levels are high, such that this is regarded as a relevant response. As another example, the user may be wanting to buy a product and has specified a maximum price: if the product is located for sale at a price lower than that maximum specified price, then this is regarded as a highly relevant response and this can be indicated accordingly; whereas if the product is located for sale at a price higher than that maximum specified price, then this is regarded as a less relevant response and this can be indicated accordingly.

In an example, the generating a measure of the relevancy of the response comprises a weak relevancy in the case that the input relates to current data and the response relies on historical data.

For example, the user may want to know today's weather, or wants to carry out some activity that might be dependent on the weather, but current weather conditions are not available. In such a case, the response may use for example yesterday's weather conditions (which is reasonable as, on average, today's weather tends to be similar to yesterday's weather), and this is flagged up for the user by the indication of the weak relevancy.

In an example, the generating a measure of the relevancy of the response is based on characteristics of a decision tree that is used to generate the response.

In an example, the indication of the relevancy of the response is a visual indication.

This can be very simple, such as illuminating a number of light sources in dependence on the relevancy of the response and/or providing some graded indicator bar, which may be coloured.

According to a second aspect disclosed herein, there is provided a digital assistant, the digital assistant being constructed and arranged to:
parse an input received from a user to obtain at least one component of the input;
pass a query including the at least one component of the input to a processing module to obtain a response to the input;
generate a response for the user at the processing module;
provide the response to the user;
generate a measure of the relevancy of the response; and
provide an indication of the relevancy of the response to the user.

There may also be provided a computer program comprising instructions such that when the computer program is executed on a computing device, the computing device is arranged to carry out a method as described above.

### Brief Description of the Drawings

To assist understanding of the present disclosure and to show how embodiments may be put into effect, reference is made by way of example to the accompanying drawings in which:
Figure 1 shows schematically two examples of a digital assistant in communication with one or more servers; and
Figure 2 shows schematically an example of a decision tree which may be used by a digital assistant.

### Detailed Description

As mentioned, a digital assistant is a device, or software running on a device, that can perform tasks or services for a user. The user can input commands or questions, etc., to the digital assistant. The digital assistant then causes the command to be carried out or provides some response to the user, including for example an answer to a question posed by the user. Digital assistants often enable the user to provide voice inputs with the spoken word and therefore often use natural language processing to match user voice input to executable commands or questions, etc. Some digital assistants continually learn using artificial intelligence techniques, including for example machine learning.

A problem with known digital assistants is that they do not provide the user with any indication of the relevance, or, equivalently, the reliability, of a response that is given by the digital assistant to an input provided by the user. Instead, typically the user is simply provided with some response and nothing more.

In an example described herein, a digital assistant receives an input from a user and parses the input to obtain at least one component of the input. A query including the at least one component is passed to a processing module to obtain a response to the input. A response for the user is generated at the processing module and provided to the user. Also, a measure of the relevancy of the response is generated, and an indication of the relevancy of the response is provided to the user. In this way, the whole process can be made more informative for the user, who can obtain some level of confidence in the relevancy of the response that is provided. This overcomes the problem of digital assistants simply giving "dumb", unintelligent responses.

In some examples, the indication of the relevancy of the response is a visual indication. The visual indication can be, and indeed preferably is, very simple, such as illuminating a number of light sources in dependence on the relevancy of the response (where, for example, no light sources are illuminated if it is determined that the response has a very low relevancy ranging to illuminating several light sources if it is determined that the response has a very high relevancy. Alternatively or additionally, visual indication can be provided by some graded indicator bar, where for example dark shading indicates low relevance and light shading indicates high relevance. In either case, the visual indication may use colours. For example, a high relevance may be indicated by green colouring, a low relevance by red colouring, and intermediate relevance by yellow or amber colouring.

Various factors may be used to determine the relevancy of the response. A number of specific examples are discussed further below.

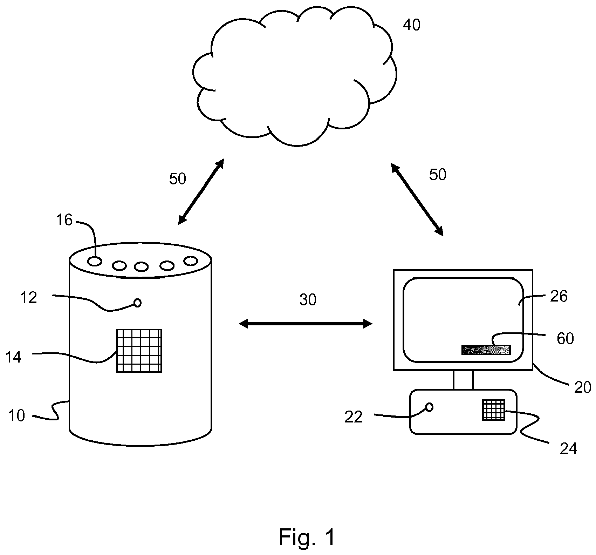

Referring now to Figure 1, this shows schematically two examples of a digital assistant in communication with one or more servers.

In particular, a first example of a digital assistant 10 is a bespoke computing device, having the usual processor, one or more memories, data storage, etc. The digital assistant 10 has a microphone 12 by which a user can input spoken commands or instructions or the like, though in other examples the user may provide inputs via some keyboard or touch screen or other input device. The digital assistant 10 has a loudspeaker 14 by which the digital assistant 10 can provide audible responses to the user, in for example natural language. Alternatively or additionally, the digital assistant 10 may have a display on which responses may be provided visually for the user. The digital assistant 10 of this example also has one or more light sources 16, which will be discussed further below. The light sources 16 may conveniently be LEDs (light emitting diodes), though other sources may be used.

A second example of a digital assistant 20 is a general computing device, such as a personal computer, laptop or tablet computer, smartphone, etc. The digital assistant 20 has the usual processor, one or more memories, data storage, etc. The digital assistant 20 has a microphone 22 by which a user can input spoken commands or instructions or the like, though, again, in other examples the user may provide inputs via some keyboard or touch screen or other input device. The digital assistant 20 has a loudspeaker 24 by which the digital assistant 20 can provide audible responses to the user, in for example natural language. In this example, the digital assistant 20 has a display 26 on which responses may be provided visually for the user.

The user may in practice use only a single digital assistant 10, 20. In other examples, the user may use both a bespoke digital assistant 10 of the first example and a general computing device digital assistant 20 of the second example. In that case, it may be convenient, and indeed useful, for the first and second digital assistants 10, 20 to communicate with each other via a connection 30, which may be wired or wireless. As just one example of this, it may be that the user inputs commands or questions using the first, bespoke digital assistant 10, which may act on the input and provide an indication of the relevancy of the response to the user and, at the same time, the second digital assistant 20 may also provide an indication of the relevancy of the response to the user.

For simplicity and brevity, much of the following description will be given only in terms of operation of the first, bespoke digital assistant 10, it being understood that the same or similar functionality may be provided by a general computing device digital assistant 20 running appropriate software.

The digital assistant 10 in this example can receive spoken inputs from a user via the microphone 12. The digital assistant 10 parses the input. That is, the digital assistant 10 analyses the input to break it down into its constituents or components. This may be used to produce a parse tree showing the syntactic relation of the components to each other and which may also contain semantic and other information. The digital assistant 10 may use natural language processing for this. In a straightforward case, the digital assistant 10 may obtain one or more components such as nouns and verbs from the input.

The components of the input are then passed to a processing module so as to obtain a response to the input. Various techniques and variations for this are possible.

For example, in simple cases, the processing module may be provided by software running locally on the digital assistant 10. This may be the case where the input is a command to "Turn on the living room lights", and the digital assistant is connected to a light controller in the user's house. As another simple example that can be processed locally by the digital assistant 10, the user may input a question or query that can be answered locally. An example might be "What is the temperature in the house?", which the digital assistant 10 can answer locally as it is connected to a heating and cooling controller in the house.

Alternatively or additionally, the processing module may be provided by remote servers operating in the "cloud" 40, as indicated in Figure 1. The digital assistant 10 may communicate with the cloud-based servers 40 over wired and/or wireless connections 50, typically via the Internet, in a manner well known in itself. Use of a cloud-based server 40 may be useful in the case that the input from the user is a question that requires access to remotely held data or that requires complex processing, which exceeds the processing power of the local digital assistant 10.

The processing module, whether located locally in the digital assistant 10 and/or in a cloud-based server 40, may use one or more techniques to process the input. For example, it is known to use decision trees, which are tree-like graphs or models of decisions and their possible consequences, and are representative of specific algorithms that are used, and "artificial intelligence" techniques generally. The processing module, again whether located locally in the digital assistant 10 and/or in a cloud-based server 40, may also operate one or more learning algorithms in order to learn appropriate responses to new inputs from a user. The learning algorithms may use decision trees.

In any event, one way or another, the digital assistant 10 receives an input from a user and formulates a response to that input, which is then provided to the user (for example, audibly, by computer-generated spoken word which is output by the speaker 14).

In addition to providing a response to the user, the digital assistant 10 also provides an indication of the relevancy of the response to the user. Examples of how to determine the relevancy of the response will be discussed further below.

The indication of the relevancy of the response may be given in a number of ways. A particularly convenient way is for the digital assistant 10 to cause the light sources 10 to be illuminated in correspondence with the relevancy. For example, at one extreme, if the digital assistant 10 determines that the response may not actually be relevant at all, or cannot determine the relevance, then the digital assistant 10 may cause none of the light sources 16 to be illuminated. On the other hand, if the digital assistant 10 determines that the response is highly relevant, then all of the light sources 16 may be illuminated. If the response is determined to be of lesser or higher intermediate relevance, then a corresponding number of light sources 16 may be illuminated.

Alternatively or additionally, the light sources 16 may provide light of different colours or pass white light through different coloured filters. The relevancy of the response may be indicated by the colour displayed. As one example to illustrate this, green may be used to indicate high relevance, yellow or amber to indicate intermediate or medium, relevance, and red to indicate no or low relevance.

Another alternative for indicating the relevancy is to represent this with some shaded display for the user. This is indicated in the example general computing device digital assistant 20 in Figure 1, though it could also be displayed by the bespoke digital assistant 10 in other examples. Referring to Figure 1, a shading bar 60 is displayed in which, for example, the degree or amount of shading used corresponds to the determined relevancy of the response. As one example to illustrate this, no or empty shading (which might appear white) indicates zero or low relevance and full shading (which might appear black) indicates high relevance, with intermediate relevances being indicated by a corresponding intermediate (or grey) shading.

Accordingly, in examples described herein, the user is provided with an indication of the relevancy of the response that is provided by the digital assistant 10, 20. This overcomes the problem of digital assistants simply giving "dumb", unintelligent responses.

Various ways of generating a measure of the relevancy of the response are possible. In general, the measure of the relevancy of the response may be obtained based on the specific input that is provided by the user to the digital assistant. That is, the process for obtaining a measure of the relevancy of the response to an input may depend on that specific input. In addition, in general, the process for obtaining a measure of the relevancy of the response to an input may depend on certain characteristics or preferences of the user, which the user may have already entered into the digital assistant. Some specific examples to illustrate this will be given below.

Alternatively or additionally, the measure of the relevancy of the response may be obtained based on characteristics of a decision tree that is used by the processing module to formulate the response, and/or on the time that the processing module took to formulate the response. An example of this will be described.

As known per se, a decision tree is a decision support tool that uses a tree-like graph or model of decisions and their possible consequences, including chance event outcomes, resource costs, and utility. A decision tree may be regarded as a way to display an algorithm. Each node in the tree represents a single decision leading towards a solution to the problem. In the present case, the problem may be regarded as answering the user question correctly and efficiently with the previously gathered pool of data.

Decision trees are commonly used in operations research, specifically in decision analysis, to help identify a strategy most likely to reach a goal, but are also a popular tool in machine learning.

A well known algorithm for building decision trees called ID3 ("Iterative Dichotomiser 3") by J. R. Quinlan employs a top-down, "greedy" search through the space of possible branches with no backtracking. ID3 uses entropy and information gain to construct the decision tree.

The decision tree is built top-down from a root node. The data is partitioned into subsets that contain instances with similar values (i.e. that are homogenous). The ID3 algorithm uses entropy to calculate the homogeneity of a sample. If the sample is completely homogeneous the entropy is zero; if the sample is an equally divided it has an entropy of one. The information gain is based on the decrease in entropy after a dataset is split on an attribute. The decision tree is constructed based on finding the attribute that returns the highest information gain (i.e. the most homogeneous branches).

In the present context, based on the information gain and entropy results that are obtained from several algorithms, a measure of the relevance of the response is obtained by taking these decision tree capabilities and search time and efficiency while formulating the response.

Pruning of the decision tree may also be used to assist in carrying out an efficient search of the decision tree. Pruning is a technique in machine learning that reduces the size of decision trees by removing sections of the tree that provide little power to classify instances.

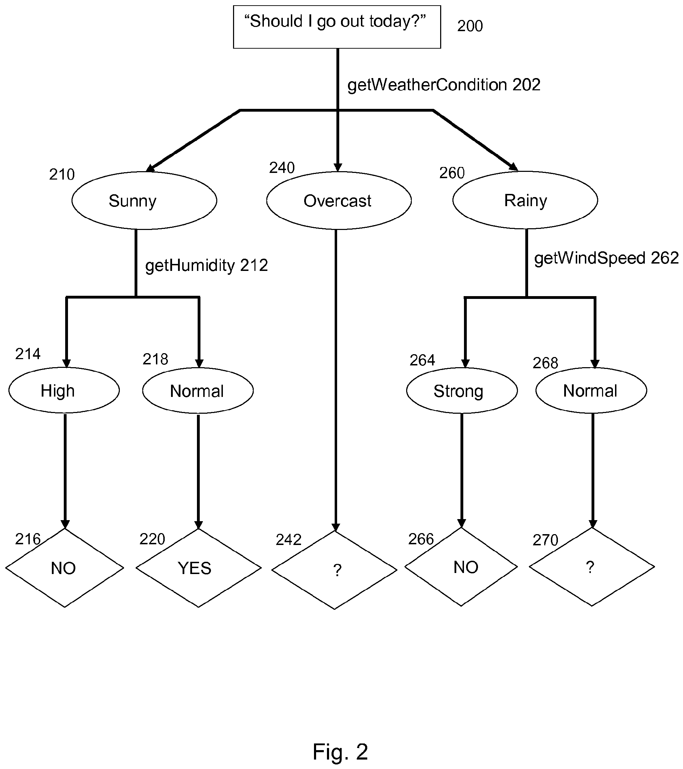

Referring now to Figure 2, a specific example of the process for generating a measure of the relevancy of the response will be described. It is emphasised that this is just one example, to illustrate the principles involved, which can easily be extended to other situations for different inputs, and different kinds of inputs, provided by the user to the digital assistant.

At 200, the user provides as an input to the digital assistant a question "Should I go out today?". The digital assistant uses NLP and parses this input as necessary to break the input down into one or more components. For example, the digital assistant may recognise the words or phrases "I", "go out" and "today". In this example, using for example a decision tree or the like, the digital assistant recognises this as a question that relates (at least in part) to the weather conditions for today, that is, the user wants know if the weather conditions are appropriate for the user to go out.

The digital assistant therefore passes a query "getWeather" 202 to the processing module in order to obtain current weather conditions. In this case, the processing module will most likely be related to some database or other resource that is remotely based (in the "cloud") and that contains current weather conditions or a forecast of weather conditions for today.

If there is no resource that is able to provide a directly relevant response to the query, then the processing module may provide a response that is based on some other data. In this specific example, if no data concerning current or today's weather conditions is available, then data relating to the previous day's weather may be used to generate the response to the user. For present purposes, this would be used to provide an indication that the relevance of the response is a weak relevance (which can then be indicated to the user as described above). That is, if for example an accurate response to an input relies on current data but only historical data is available, that may be used to provide an indication that the relevancy of the response is weak. Moreover, in this case, if no current or historical data is available, then the relevancy of any response provided may be regarded as zero and indicated to the user accordingly (for example, by not lighting any of the indicator lights or showing a red light in the examples discussed above).

Returning to Figure 2, in this example, the processing module provides a response relating to the current weather. Three example responses are shown, namely "Sunny" 210, "Overcast" (cloudy) 240 and "Rainy" 260. Here it is noted that the response that is provided (here, the weather condition) may not relate directly in a one-to-one relationship with the query input by the user (here, "Should I go out today?"). In such a case, there may be a number of possible types of response, which may be obtained using different decision trees for example. In such a case, when an indication of the relevancy of the response is given to the user, this may be for example the most relevant of plural different types of response that are given.

Discussing this specific example further, in the case that the response is "Sunny" 210, a further related query may be sent to a further processing module. The further processing module may in general again be located in the digital assistant or in some remote server. In this example, the user has previously input a characteristic to the digital assistant concerning the user's health, here that the user has breathing problems when there is high humidity. The digital assistant therefore passes a query "getHumidity" 212 to the processing module in order to obtain current humidity conditions. If the response to the humidity query is "High" 214, then the response that is provided by the digital assistant to the user is "No" 216. If the response to the humidity query is "Normal" (or "Low" say) 218, then the response that is provided by the digital assistant to the user is "Yes" 220. In this case, because the response that is provided by the digital assistant to the user takes into account at least one characteristic or preference of the user, the digital assistant judges that the response 216, 220 is an exact answer, and therefore an indication that the response is highly relevant is provided by the digital assistant.

In the case that the response is "Overcast" 240, and bearing in mind that the query 200 from the user is whether they should go out today, in this example ideally the digital assistant would like to be able to know whether or not it will rain today. However, for the sake of illustration in this example, the digital assistant has no facility or access to information concerning the likelihood of rain given the current (overcast) weather conditions. Accordingly, in this example, the digital assistant is not able to give a "yes" or "no" response, as indicated by the response 242 being "?". As such, the relevancy of the response that is indicated to the user by the digital assistant is low or zero.

As a variation of this, even though the digital assistant is not able to give an answer that is relevant based on its own look-up and use of a corresponding processing module, it may be that the user has previously input a characteristic that the user has a personal interest in taking walks during overcast or cloudy days. In that case, the response that is given would be a "Yes" and, moreover, that would be an exact response, so a high relevancy is indicated to the user.

In the case that the response is "Rainy" 260, the decision tree or the like used by the digital assistant may then look up the current wind speed by sending a query "getWindspeed" 262 to a wind speed processing module (in this example, typically located in a remote server).

If the response to this query is that the wind speed is "Strong" 264, then the response given to the user by the digital assistant might be "No" 266, on the basis that strong winds are not liked by or are potentially dangerous to people. Moreover, given that this response would be applicable to most users, the relevancy might be indicated as "high". Again, however, the relevancy may be determined based on a characteristic or preference of the user which has been previously input by the user. For example, the user may have previously indicated to the digital assistant that the user likes to walk on windy days (perhaps because the user has an interest in photography during stormy weather). In such a case, the relevancy that is indicated may be "low", even though the same response ("No") is given to the query that is input by the user.

Pursuing this example further, the response to "getWindspeed" query may be that the wind speed is "Normal" (or "Low") 268. The response to the original user query "Should I go out today?" may therefore be a "?" 270. With regard to the relevancy of this response, assume in this example that the digital assistant has no preloaded characteristic or preference from the user concerning whether or not the user has any specific interest in walks on rainy days when the wind speed is low or normal. In such a case, the relevancy may be indicated as "low".

However, this may be different, depending on for example one or more characteristics of the user. For example, the user may have entered characteristics that the user is not single and also ideally goes for walks each day with a partner. In such a case, the characteristic may lead to the response to the query being "Yes" (do go for a walk) and, moreover, the relevancy may be indicated as high.

As well as providing the user with some level of confidence in the relevancy of the response that is provided, this also enables the user to appreciate quickly that the digital assistant may have misunderstood the query (because for example a low relevancy has been indicated). This enables the user quickly to re-issue the input (the query or the command say) if necessary or desired.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating a digital assistant, the method comprising:
receiving an input from a user;
parsing the input to obtain at least one component of the input;
passing a query including the at least one component of the input to a processing module to obtain a response to the input;
generating a response for the user at the processing module;
providing the response to the user;
generating a measure of the relevancy of the response; and
providing an indication of the relevancy of the response to the user.

2. A method according to claim 1, wherein the generating a measure of the relevancy of the response comprises taking into account at least one characteristic or preference of the user.

3. A method according to claim 1 or claim 2, wherein the generating a measure of the relevancy of the response comprises generating a high relevancy in the case that the response corresponds to at least one user preference.

4. A method according to any of claims 1 to 3, wherein the generating a measure of the relevancy of the response comprises a weak relevancy in the case that the input relates to current data and the response relies on historical data.

5. A method according to any of claims 1 to 4, wherein the generating a measure of the relevancy of the response is based on characteristics of a decision tree that is used to generate the response.

6. A method according to any of claims 1 to 5, wherein the indication of the relevancy of the response is a visual indication.

7. A digital assistant, the digital assistant being constructed and arranged to:
parse an input received from a user to obtain at least one component of the input;
pass a query including the at least one component of the input to a processing module to obtain a response to the input;
generate a response for the user at the processing module;
provide the response to the user;
generate a measure of the relevancy of the response; and
provide an indication of the relevancy of the response to the user.

8. A digital assistant according to claim 7, wherein the generating a measure of the relevancy of the response comprises taking into account at least one characteristic or preference of the user.

9. A digital assistant according to claim 7 or claim 8, arranged such that the generating a measure of the relevancy of the response comprises generating a high relevancy in the case that the response corresponds to at least one user preference.

10. A digital assistant according to any of claims 7 to 9, arranged such that the generating a measure of the relevancy of the response comprises a weak relevancy in the case that the input relates to current data and the response relies on historical data.

11. A digital assistant according to any of claims 7 to 10, arranged such that the generating a measure of the relevancy of the response is based on characteristics of a decision tree that is used to generate the response.

12. A digital assistant according to any of claims 7 to 11, comprising one or more visual indicators for indicating the relevancy of the response to a user.

13. A computer program comprising instructions such that when the computer program is executed on a computing device, the computing device is arranged to carry out a method according to any of claims 1 to 6.
